**Europäisches Patentamt**

**European Patent Office**

**Office européen des brevets**

(19)

(11) Veröffentlichungsnummer : **0 485 442 B1**

(12) # EUROPÄISCHE PATENTSCHRIFT

(45) Veröffentlichungstag der Patentschrift :
09.12.92 Patentblatt 92/50

(51) Int. Cl.$^5$ : **B60K 17/344, F16H 57/04**

(21) Anmeldenummer : **90911617.0**

(22) Anmeldetag : **14.07.90**

(86) Internationale Anmeldenummer :
**PCT/EP90/01159**

(87) Internationale Veröffentlichungsnummer :
**WO 91/01898 21.02.91 Gazette 91/05**

(54) **GETRIEBEEINHEIT FÜR EIN ZWEI TRIEBACHSEN AUFWEISENDES KRAFTFAHRZEUG.**

(30) Priorität : **29.07.89 DE 3925213**

(43) Veröffentlichungstag der Anmeldung :
**20.05.92 Patentblatt 92/21**

(45) Bekanntmachung des Hinweises auf die
Patenterteilung :
**09.12.92 Patentblatt 92/50**

(84) Benannte Vertragsstaaten :
**DE ES FR GB IT**

(56) Entgegenhaltungen :
**DE-A- 3 317 247
DE-C- 825 359
DE-C- 3 506 727
US-A- 3 162 269
US-A- 4 205 739
US-A- 4 359 909**

(73) Patentinhaber : **VOLKSWAGEN
AKTIENGESELLSCHAFT
W-3180 Wolfsburg (DE)**

(72) Erfinder : **GRUSS, Roland
Am Kamp 6
W-3181 Jembke (DE)**
Erfinder : **WIESE, Klaus
Dr.-Heinrich-Jasper-Str. 9
W-3340 Wolfenbüttel (DE)**
Erfinder : **DIESSNER, Eberhard
J.-F.-Kennedy-Allee 107
W-3180 Wolfsburg 1 (DE)**

(74) Vertreter : **Grützmann, Dieter, Dipl.-Ing. et al
c/o Volkswagen AG Patentwesen Postfach
W-3180 Wolfsburg 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Getriebeeinheit für ein zwei Triebachsen aufweisendes Kraftfahrzeug mit einem quer zur Fahrtrichtung liegenden Motor und einem zur Motorwelle parallelachsigen Geschwindigkeits-Wechselgetriebe der im Oberbegriff des Patentanspruchs 1 genannten Art, wie es u. a. beispielsweise aus der DE-C-33 17 247 bekannt ist.

Bei diesen bekannten Getriebeeinheiten wird die eine Triebachse des Fahrzeugs über einen gleichzeitig auch als Schleuderrad für eine Schleuder- oder Spritzölschmierung dienenden Stirnabtrieb des Wechselgetriebes angetrieben. Für den Antrieb der zweiten Triebachse des Fahrzeuges enthält die Getriebeeinheit einen Winkeltrieb, der über eine Verbindungswelle, i. a. eine Hohlwelle, mit dem Stirnabtrieb verbunden ist. Das Getriebegehäuse des Winkeltriebs ist dabei neben dem Stirnabtrieb des Wechselgetriebes seitlich am Wechselgetriebegehäuse angeordnet, wobei in der die Innenräume der beiden Getriebegehäuse voneinander trennenden Trennwand eine vorzugsweise aus Kegelrollenlagern bestehende Wellenlageranordnung zur Lagerung der vom Stirnabtrieb zum Winkeltrieb führenden Verbindungswelle angeordnet ist. Beide Getriebegehäuse sind dabei mit einem gewissen Ölvorrat für eine Schleuder- oder Spritzölschmierung der relevanten Getriebeteile gefüllt.

Die Ölvorräte von schleuder- bzw. spritzölgeschmierten Getrieben sind jeweils derart zu bemessen, daß einerseits in jeder Betriebsphase für ausreichende Schmierung gesorgt ist, andererseits aber die eingesetzte Ölmenge auf das wirklich erforderliche Minimum begrenzt ist, u. a. auch, um einer die Schmierfähigkeit des Öls beeinträchtigenden Erwärmung durch die sogenannte Panscharbeit entgegenzuwirken.

Insbesondere bei leistungsstarken Winkeltrieben, d. h. bei Winkeltrieben mit einem starken Leistungsdurchtrieb treten in diesem Zusammenhang Probleme auf.
Einerseits ist das Innenraumvolumen des Winkeltriebs im Vergleich zu dem des Wechselgetriebes vergleichsweise klein und damit auch dessen Ölfüllung entsprechend gering; andererseits ist mit einem starken Leistungsdurchtrieb jeweils eine entsprechend grobe Wärmeentwicklung verbunden, welche vom der Schmierung dienenden Öl abgeleitet werden müßte. Einerseits ist man aus Platzgründen bestrebt, eine möglichst kompakte bauraumsparende kleinvolumige Bauweise des Winkeltriebs zu erhalten, andererseits kann aber die Ölfüllung im vergleichsweise kleinvolumigen Winkeltriebgehäuse nicht einfach vergrößert werden. Solches "mehreingefülltes" Öl würde nämlich über die Wellenlageranordnung der Verbindungswelle ins Wechselgetriebegehäuse abfließen, dessen Ölstand bei stehendem Fahrzeug i. a. tiefer liegt als die Wellenlageranordnung.

Der Erfindung liegt daher die Aufgabe zugrunde, eine Getriebeeinheit der im Oberbegriff des Patentanspruchs 1 genannten Art zu schaffen, die einerseits kompakt und bauraumsparend ausgebildet ist und andererseits mit kleinstmöglichem Öleinsatz auch bei starkem Leistungsdurchtrieb in jeder Betriebsphase des fahrzeugs für eine ausreichende und,zuverlässige Schmierung der Getriebeteile des Wechselgetriebes bzw. des Winkeltriebs sorgt.

Diese Aufgabe wird erfindungsgemäß durch die Merkmale des Kennzeichens des Patentanspruchs 1 gelöst.

Vorteilhafte Ausgestaltungen und Weiterbildungen der Erfindung sind in den Unteransprüchen angegeben.

Erfindungsgemäß wird durch räumlich geschickte Anordnung von als Ölzulauf und Ölablauf dienenden Wanddurchlässen zwischen den Wechselgetriebe- und Winkeltriebinnenräumen während des Betriebs ein ständiger Ölaustausch zwischen den Ölvorräten des Wechselgetriebes und des Winkeltriebs erzeugt, so daß trotz eines vergleichsweise kleinen, bei konventioneller Bauweise für einen starken Leistungsdurchtrieb an sich nicht ausreichenden Ölvorrat im Winkeltrieb eine zuverlässige und ausreichende Schmierung des Winkeltriebs bewirkt wird, und zwar in sämtlichen Betriebsphasen.

Anhand eines in der Zeichnung dargestellten Ausführungsbeispiels wird die Erfindung nachstehend näher erläutert.

In der zum Teil prinzipienhaften Zeichnung zeigen

Fig. 1 ein Kraftfahrzeug mit zwei Triebachsen und einem quer zum Fahrzeug liegenden Motor sowie einer Getriebeeinheit mit zur Motorwelle parallelachsigem Wechselgetriebe,

Fig. 2 eine Schnittdarstellung des in Fig. 1 mit II bezeichneten Getriebedetails entlang der in Fig. 3 mit II bezifferten Schnittführung,

Fig. 3 eine Ansicht dieses Getriebedetails in Richtung des in Fig. 2 mit III bezifferten Pfeils und

Fig. 4 eine vergrößerte Darstellung des in Fig. 2 mit IV bezifferten Details.

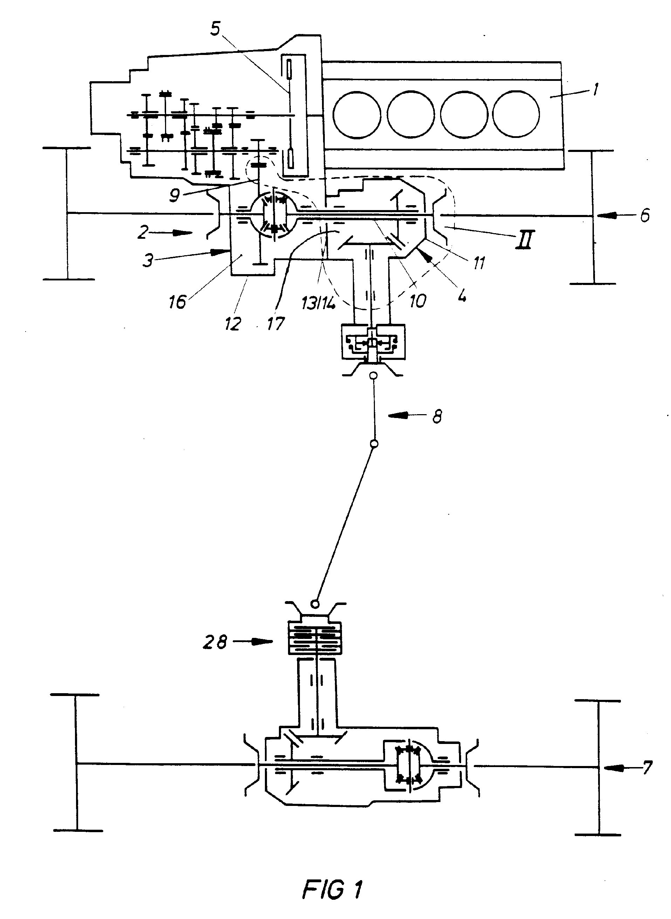

Bei der in Fig. 1 dargestellten Antriebsanordnung eines allradgetriebenen Kraftfahrzeugs wird die eine Triebachse 6, nämlich die Vorderachse ständig angetrieben, während der Antrieb der Räder der zweiten Triebachse 7, nämlich der Hinterachse selbsttätig mittels einer im Zuge des Antriebsstrangs (Kardanwelle) 8 zwischen der ersten Triebachse 6 und der zweiten Triebachse 7 angeordneten Visko-Kupplung 28 hergestellt wird, derart, daß die beiden Triebachsen drehmomentenmäßig im wesentlichen ständig miteinander gekoppelt sind.

Ein quer zur Fahrtrichtung liegender Motor 1 mit Kupplung 5 und einem zur Motorwelle parallelachsigen anschließenden Geschwindigkeits-Wechselgetriebe 3 sind frontseitig angeordnet, wobei die Räder der ersten Triebachse 6 über einen Stirnabtrieb 9 sowie ein nachgeschaltetes nicht weiter beziffertes Vorderachsdifferential und übliche Antriebshalbwellen ständig unmittelbar angetrieben werden.

Der Antrieb der Räder der zweiten Triebachse erfolgt über den mittels eines Winkeltriebs 4 am Wechselgetriebe 3 angekoppelten Antriebsstrang 8 (Kardanwelle), die Visko-Kupplung 28 sowie ein nicht weiter beziffertes Hinterachsgetriebe und übliche Antriebshalbwellen.

Geschwindigkeits-Wechselgetriebe 3 und Winkeltrieb 4 sind baulich zu einer Getriebeeinheit 2 zusammengefaßt, wobei das Winkeltriebgehäuse 11 neben dem Stirnabtrieb 9 seitlich am Wechselgetriebegehäuse angeordnet ist.

Beide Getriebegehäuse sind mit einem gewissen Ölvorrat für eine Schleuder- oder Spritzölschmierung ihrer Getriebeteile gefüllt, wobei im Wechselgetriebe 3 der Stirnabtrieb 9 auch als Schleuderrad für diese Spritzölschmierung wirkt.

Der für den Antrieb der zweiten Triebachse 7 vorgesehene Winkeltrieb 4 wird vom Stirnabtrieb 9 über einer Verbindungswelle 10 angetrieben. Im Ausführungsbeispiel ist sie als Hohlwelle ausgebildet und mit dem Gehäuse des nicht weiter bezifferten Vorderachsdifferentials verbunden, welches auch den Stirnabtrieb 9 trägt.

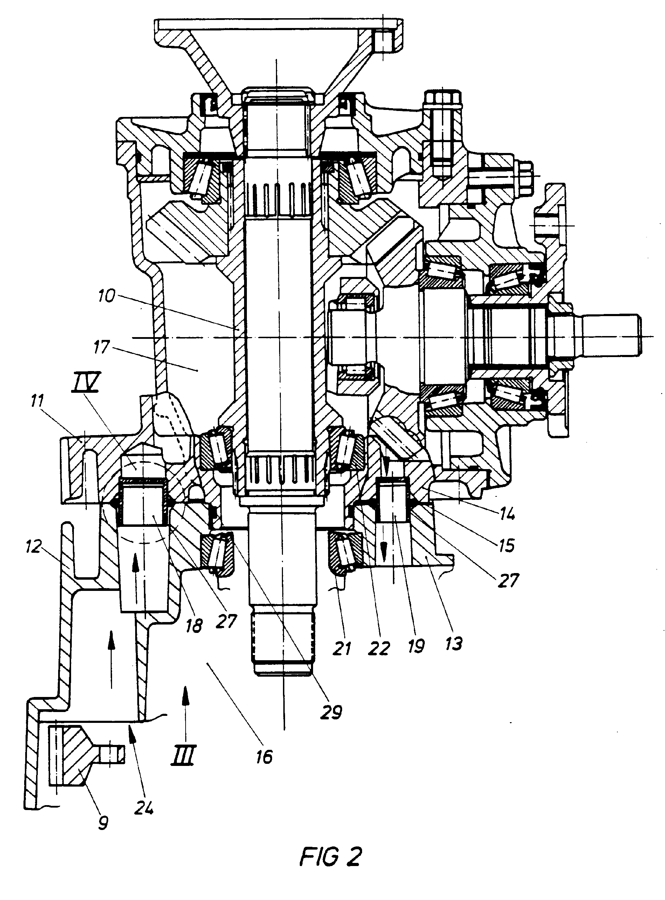

Wie der Schnittdarstellung der Fig. 2 zu entnehmen ist, ist zur Lagerung der Verbindungswelle 10 in der die beiden Getriebeinnenräume 16 und 17 voneinander trennenden Trennwand 13, 14 eine aus zwei Kegelrollenlagern 21, 22 bestehende Wellenlageranordnung vorgesehen.

In der die Ölvorräte der beiden Getriebeinnenräume 16, 17 voneinander trennenden Trennwand 13, 14 ist jeweils ein erster Wanddurchlaß 18, der als vom Wechselgetriebe 3 zum Winkeltrieb 4 führender Ölzulauf dient, sowie ein zweiter Wanddurchlaß 19, der als vom Winkeltrieb 4 zum Wechselgetriebe 3 furhrender Ölrücklauf dient, angeordnet; statt jeweils nur eines solchen Wanddurchlasses können erforderlichenfalls auch mehrere derartige Wanddurchlässe vorgesehen werden.

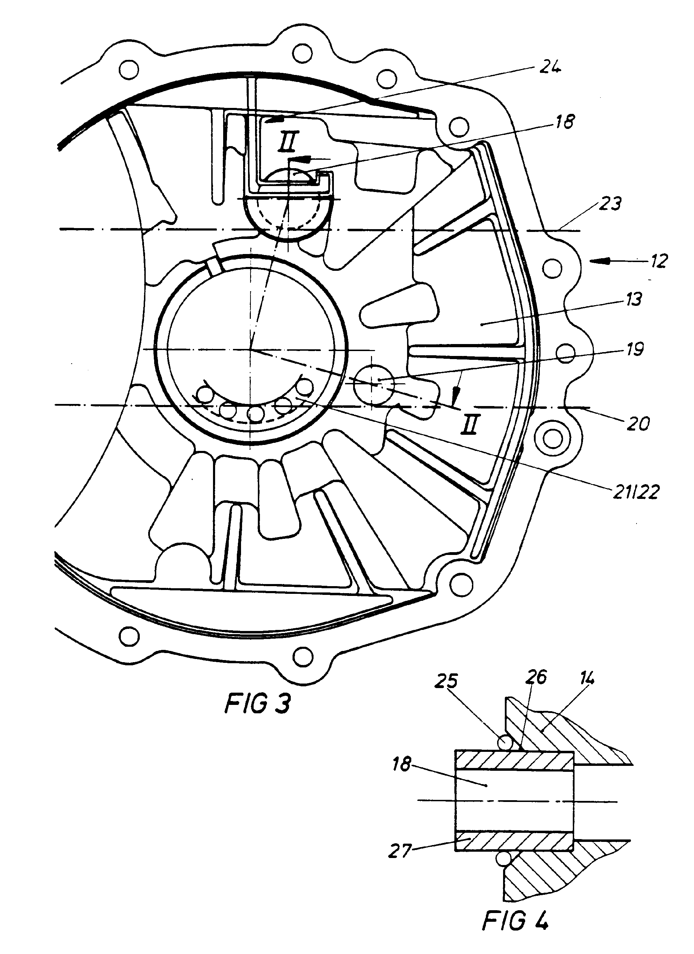

Der als Ölrücklauf dienende zweite Wanddurchlaß 19 ist räumlich derart angeordnet, daß er nicht unterhalb einer ersten fiktiven Horizontalebene 20 liegt, welche etwa durch die Unterkante des wirksamen Axialspalts der in der Trennwand 13, 14 angeordneten Wellenlageranordnung 21, 22 der Verbundungswelle 10 verläuft. Der als Ölzulauf dienende erste Wanddurchlaß 18 ist dagegen oberhalb einer etwa durch den höchstgelegenen zweiten Wanddurchlaß 19 verlaufenden zweiten fiktiven Horizontalebene 23 angeordnet. In der die Innenansicht der zum benachbarten Winkeltrieb gelegenen Trennwand 13 des Wechselgetriebegehäuses 12 zeigenden Fig. 3 sind diese räumlichen Verhältnisse gut zu erkennen.

Wie aus den Figuren 2 und 3 zu erkennen ist, ist innerhalb des Wechselgetriebegehäuses 12 noch eine aus Führungsrippen o. ä. bestehende Ölfang- und Ölleiteinrichtung 24 angeordnet, welche vom Stirnabtrieb 9 im Rahmen der Schleuder- bzw. Spritzölschmierung aufgeworfenes Öl auffängt und zum ersten Wanddurchlaß 18 hin ablenkt. Über den bzw. die höhergelegenen ersten Wanddurchlässe 18 gelangt so während des Betriebes ständig ein Teil des ursprünglich im Wechselgetriebegehäuses befindlichen Öls in das vergleichsweise kleinvolumige Winkeltriebgehäuse 11. Gleichzeitig wird ein Teil des im Winkeltriebgehäuse befindlichen Ölvorrats über den bzw. gegebenenfalls die tiefer gelegenen zweiten Wanddurchlässe 19 wieder ins Wechselgetriebegehäuse 12 zurückgeführt, nämlich dann, wenn der Ölstand im Winkeltriebgehäuse über die in Fig, 3 mit 20 bezifferte erste Horizontalebene ansteigt.

Durch diesen ständigen Ölaustausch zwischen den beiden Ölvorräten der beiden Getriebegehäuse wird trotz starken Leistungsdurchtriebs durch den Winkeltrieb eine zuverlässige und effektive Schmierung des Winkeltriebs gewährleistet, da es trotz des starken Leistungsdurchtriebs nicht zu unzulässig großer Erwärmung des Winkeltrieb-Ölvorrats kommt, zumal wegen des vergleichsweise geringen Ölstandes im Winkeltrieb auch keine das Öl erwärmende spürbare Panscharbeit auftritt.

Statt nur einer Ölfang- und Ölleiteinrichtung 24 kann erforderlichenfalls natürlich noch eine zweite entsprechende Einrichtung vorgesehen werden.

Vorteilhafterweise wird die Ölfang- und -leiteinrichtung 24 als integraler Bestandteil des normalerweise gegossenen Wechselgetriebegehäuses 12 ausgebildet werden. Grundsätzlich ist es natürlich auch möglich, die Ölfang- und -leiteinrichtung als separates Bauteil auszubilden und innerhalb des Wechselgetriebegehäuses an geeigneter Stelle zu befestigen.

Im Ausführungsbeispiel ist das Winkeltriebgehäuse 11 als separates Bauteil ausgebildet und seitlich am Wechselgetriebegehäuse 12 angeflanscht. Eine solche Bauweise ist insbesondere dann von Vorteil, wenn für die Getriebeeinheit auf ein übliches Serienwechselgetriebegehäuse eines Kraftfahrzeuges mit nur einer Triebachse zurückgegriffen wird. Die Erfindung ist jedoch auf derartige Konstruktionen nicht beschränkt.

Bei Getriebeeinheiten mit aneinander angeflanschten Getriebegehäusen muß an der Trennfuge 15 für eine sichere Abdichtung nach außen gesorgt werden. Bei bekannten Getriebeeinheiten ohne die vorerwähnten Wanddurchlässe genügt zu diesem Zwecke eine im radialinneren, d. h. verbindungswellennahen Bereich angeordnete Ringdichtung 29. Es ist leicht erkennbar, daß bei Anordnung von die beiden Getriebeinnenräume 16 und 17 miteinander verbindenden Wanddurchlässen 18 und 19 weitere Dichtungsmaßnahmen erforderlich sind. Grundsätzlich wäre es denkbar, zu diesem Zweck im äußeren Randbereich der Trennfuge einen entsprechenden Dichtungsring o. ä. vorzusehen. Eine solche Dichtungsanordnung wäre jedoch vergleichsweise aufwendig und fertigungstechnisch kompliziert, weil eine solche Getriebeeinheit im Bereich dieser Trennfuge im allgemeinen eine von der Kreiskontur abweichende Außenkontur besitzt.

In vorteilhafter Weise werden daher im Ausführungsbeispiel die Wanddurchlässe 18 und 19 selbst im Bereich der Trennfuge 15 zwischen den aneinanderliegenden Trennwänden 13, 14 der beiden Getriebegehäuse durch je einen Dichtungsring 25, vorzugsweise durch einen Rundschnurring, nach außen abgedichtet.

Um die Montage dieser unkomplizierten und vergleichsweise kleinen Dichtungsringe weiter zu vereinfachen, können die Wanddurchlässe des einen Getriebegehäuses, im Ausführungsbeispiel die des Winkeltriebgehäuses 11 an ihren dem anderen Getriebegehäuse zugekehrten Enden jeweils eine umlaufende Fase 26 zur teilweisen Aufnahme der Dichtungsringe 25 aufweisen, während die Trennwand des anliegenden anderen Getriebegehäuses, im Ausführungsbeispiel des Wechselgetriebegehäuses12, im Bereich der Wanddurchlässe planflächig ist.
Anstelle einer umlaufenden Fase 26 können die Wanddurchlässe 18, 19 auf dieser Seite gegenbenenfalls auch von einer entsprechenden ringförmigen Nut umgeben sein.

Von Vorteil ist es, wenn in die mit einer Fase 26 versehenen bzw. von einer entsprechenden ringförmigen Nut umgebenen Wanddurchlässe aus diesem Getriebegehäuse herausragende Hülsen 27 eingelassen, z. B. eingepreßt sind, die auch für die Dichtungsringe 25 als Führungen dienen. In der Schnittdarstellung der Fig. 4 sind diese Details gut erkennbar.

**Patentansprüche**

1. Getriebeeinheit (2) für ein zwei Triebachsen (6, 7) aufweisendes Kraftfahrzeug mit einem quer zur Fahrtrichtung liegenden Motor (1) und einem zur Motorwelle parallelachsigen, in einem ersten Getriebeinnenraum (16) angeordneten Geschwindigkeits-Wechselgetriebe (3), das über einen Stirnabtrieb (9) die eine Triebachse (6) und über einen mit diesem Stirnabtrieb (9) über eine Verbindungswelle (10) verbundenen Winkeltrieb (4), der in einem vom ersten Getriebeinnenraum (16) durch eine Trennwand (13, 14) getrennten zweiten Getriebeinnenraum (17) angeordnet ist, eine zur zweiten Triebachse (7) führende Antriebswelle (8) antreibt, wobei das Winkeltriebgehäuse (11)

neben dem Stirnabtrieb (9) seitlich am Wechselgetriebegehäuse (12) angeordnet und wie dieses mit einem gewissen Ölvorrat für eine Schleuder- oder Spritzölschmierung der Getriebeteile gefüllt ist,
dadurch gekennzeichnet, daß die Ölvorräte der durch eine Trennwand (13, 14) voneinander getrennten beiden Getriebeinnenräume (16, 17) durch mindestens einen als vom Wechselgetriebe (3) zum Winkeltrieb (4) führenden Ölzulauf dienenden ersten Wanddurchlaß (18) und mindestens einen als vom Winkeltrieb (4) zum Wechselgetriebe (3) führenden Ölrücklauf dienenden zweiten Wanddurchlaß (19) miteinander in Verbindung stehen, daß die zweiten Wanddurchlässe (19) räumlich derart angeordnet sind, daß sie nicht unterhalb einer ersten fiktiven Horizontalebene (20) liegen, welche etwa durch die Unterkante des wirksamen Axialspalts einer in der Trennwand (13, 14) vorgesehenen Wellenlageranordnung (21, 22) der Verbindungswelle (10) verläuft, daß die ersten Wanddurchlässe (18) oberhalb einer etwa durch den höchstgelegenen zweiten Wanddurchlaß (19) verlaufenden zweiten fiktiven Horizontalebene (23) angeordnet sind
und daß innerhalb des Wechselgetriebegehäuses (12) mindestens eine mit dem als Schleuderrad für die Schleuder- oder Spritzölschmierung wirkenden Stirnabtrieb (9) zusammenwirkende Ölfang- und -leiteinrichtung (24) angeordnet ist, über die vom Stirnabtrieb (9) aufgeworfenes Öl zu den ersten Wanddurchlässen (18) hin abgelenkt wird.

2. Getriebeeinheit nach Anspruch 1,
dadurch gekennzeichnet, daß die Ölfang- und -leiteinrichtung (24) integraler Bestandteil des gegossenen Wechselgetriebegehäuses (12) ist.

3. Getriebeeinheit nach Anspruch 1,
dadurch gekennzeichnet, daß die Ölfang- und -leiteinrichtung (24) ein separates, im Wechselgetriebegehäuse (12) befestigtes Bauteil ist.

4. Getriebeeinheit nach einem der Ansprüche 1 bis 3, mit einem als separates Bauteil ausgebildeten und seitlich am Wechselgetriebegehäuse (12) angeflanschten Winkeltriebgehäuse (11),
dadurch gekennzeichnet, daß die Wanddurchlässe (18, 19) im Bereich der Trennfuge (15) zwischen den aneinanderliegenden Trennwänden (13, 14) der beiden Getriebegehäuse (11, 12) durch je einen Dichtungsring (25), vorzugsweise einen Rundschnurring, nach außen abgedichtet sind.

5. Getriebeeinheit nach Anspruch 4,

dadurch gekennzeichnet, daß die Wanddurchlässe (18, 19) des einen Getriebegehäuses (11) an ihren dem anderen Getriebegehäuse (12) zugekehrten Enden jeweils eine umlaufende Fase (26) aufzeisen oder von einer entsprechenden ringförmigen Nut umgeben sind zur teilweisen Aufnahme der Dichtungsringe (25), während die Trennwand (13) des anliegenden anderen Getriebegehäuses (12) im Bereich der Wanddurchlässe (18, 19) planflächig ist.

6. Getriebeeinheit nach Anspruch 5,
dadurch gekennzeichnet, daß in die mit einer Fase (26) versehenen bzw. von einer ringförmigen Nut umgebenen Wanddurchlässe aus dem Getriebegehäuse herausragende, als Führungen dienende Hülsen (27) eingelassen, vorzugsweise eingepreßt sind.

## Claims

1. Gear box unit (2) for a motor vehicle having two driving shafts (6,7) and an engine (1) lying transverse to the driving direction and a speed change gear (3) arranged parallel to the axis of the engine shaft and in a first gear box interior space (16), the speed gear change (3) driving by way of a front drive (9) the one driving shaft (6) and driving by way of an angle drive (4) connected to this front drive (9) by way of a connecting shaft (10), the angle drive (4) being arranged in a second gear box interior space (17), which is separated from the first gear box interior space (16) by means of a partition wall (13, 14), a drive shaft (8) leading to a second driving shaft (7), wherein the angle gear housing (11) is arranged next to the front drive (9) laterally on the gear change housing (12) and this is likewise filled with a certain supply of oil for centrifugal or splash lubrication of the gear parts,
characterised in that the oil supplies in the two gear box interior spaces (16, 17) which are separated from each other by means of a partition wall (13, 14) are interconnected by means of at least a first wall passage (18) which serves as an oil inlet leading from the gear change (3) to the angle drive (4) and at least a second wall passage (19) which serves as an oil return leading from the angle drive (4) to the gear change (3),
that the second wall passages (19) are spatially arranged in such a way that they do not lie below a first imaginary horizontal plane (20), which passes approximately through the lower edge of the effective axial gap in a shaft bearing arrangement (21, 22), provided in the partitioning wall (13, 14) of the connecting shaft (10),
that the first wall passages (18) are arranged above a second imaginary horizontal plane (23), which passes approximately through the uppermost second wall passage (19),
and that at least one oil-collecting and oil-conducting device (24) acting in conjunction with the front drive (9) which acts as a centrifugal wheel for centrifugal or splash lubrication, is disposed within the gear box housing (12) and by way of which, the oil thrown up by the front drive (9) is diverted towards the first wall passages (18).

2. Gear box unit according to claim 1, characterised in that, the oil-collecting and oil-conducting device (24) is an integral part of the cast gear change housing (12).

3. Gear box unit according to claim 1, characterised in that the oil-collecting and oil-conducting device (24) is a separate component attached in the gear change housing (12).

4. Gear box unit according to one of claims 1 to 3, having an angle gear housing (11) formed as a separate component and flanged laterally on the gear change housing (12),
characterised in that the wall passages (18, 19) are each closed off to the outside in the region of the partitioning joint (15) between the adjacent partitioning walls (13, 14) of the two gear housings (11, 12) by means of a sealing ring (25), preferably a toroidal sealing ring.

5. Gear box unit according to claim 4, characterised in that the wall passages (18, 19) of one of the gear housings (11) have at their ends facing the other gear housing (12) in each case a surrounding bevel (26) or are surrounded by a corresponding annular groove for the purpose of partially accommodating the sealing ring (25), whereas the partitioning wall (13) of the other adjacent gear housing (12) is plane faced in the region of the wall passages (18, 19).

6. Gear box unit according to claim 5, characterised in that the sleeves (27), which protrude out of the gear housing and act as guides, are embedded preferably pressed into the wall passages, which are fitted with a bevel (26) or are surrounded by an annular groove.

## Revendications

1. Groupe d'engrenages (2) pour un véhicule à deux essieux moteurs (6, 7) qui comprend un moteur (1) disposé transversalement par rapport à la direction de marche ainsi qu'une boîte (3) de changement de vitesses disposée dans une première chambre (16), dont les arbres sont parallèles à celui du moteur et qui commande l'un (6) des essieux moteurs par l'intermédiaire d'un engrenage droit de sortie (9) ainsi qu'un arbre de commande (8), menant au second essieu moteur (7), par l'intermédiaire d'un engrenage conique (4) qui est relié par un arbre de transmission (10) à cet engrenage droit de sortie (9) et qui est disposé dans une seconde chambre (17) séparée de la première chambre (16) par une cloison (13, 14), le carter (11) de l'engrenage conique étant disposé latéralement contre le carter (12) de la boîte de vitesses, à côté de l'engrenage droit de sortie (9) et étant rempli, comme ce carter de la boîte de vitesses, d'une certaine réserve d'huile destinée à une lubrification par barbotage ou par projection d'huile des éléments de l'engrenage, caractérisé en ce que les réserves d'huile des deux chambres (16, 17) des engrenages qui sont séparées l'une de l'autre par une cloison (13, 14) communiquent par au moins une première traversée (18) de la cloison qui sert d'arrivée d'huile menant de la boîte de vitesses (3) à l'engrenage conique (4) et par au moins une seconde traversée (19) de la cloison servant de reflux d'huile menant de l'engrenage conique (4) à la boîte de vitesses (3), en ce que les secondes traversées (19) sont disposées dans l'espace de manière à ne pas être situées au-dessous d'un premier plan horizontal fictif (20) qui passe approximativement par le bord inférieur de l'interstice axial efficace d'un ensemble de paliers (21, 22) de l'arbre de transmission (10) qui sont prévus dans la cloison (13, 14), en ce que les premières traversées (18) sont disposées au-dessus d'un second plan horizontal fictif (23) qui passe par la seconde traversée (19) qui est la plus haute et en ce qu'au moins un dispositif (24) collecteur et conducteur d'huile qui coopère avec l'engrenage droit de sortie (9), qui fonctionne en roue centrifuge pour la lubrification par barbotage ou projection d'huile, est disposé à l'intérieur du carter (12) de la boîte de vitesses, ce dispositif déviant l'huile projetée par l'engrenage droit de sortie (9) vers les premières traversées (18).

2. Groupe d'engrenages selon la revendication 1, caractérisé en ce que le dispositif (24) collecteur et conducteur d'huile fait partie intégrante du carter (12) de la boîte de vitesses qui est réalisé par coulée.

3. Groupe d'engrenages selon la revendication 1, caractérisé en ce que le dispositif (24) collecteur et conducteur d'huile est un composant séparé qui est fixé dans le carter (12) de la boîte de vitesses.

4. Groupe d'engrenages selon l'une des revendications 1 à 3, comprenant un carter (11) d'engrenage conique réalisé sous forme de composant séparé et fixé par brides sur le carter (12) de la boîte de vitesses, caractérisé en ce que chacune des traversées (18, 19) est étanchéifiée vis à vis de l'extérieur par un anneau d'étanchéité (25), de préférence par un anneau de cordon rond, dans la région du joint (15) situé entre les cloisons (13, 14) appliquées l'une contre l'autre des deux carters (11, 12) d'engrenage.

5. Groupe d'engrenages selon la revendication 4, caractérisé en ce que chacune des traversées (18, 19) de la cloison de l'un (11) des carters d'engrenage comporte à l'extrémité tournée vers l'autre carter (12) d'engrenage un chanfrein circonférentiel (26) ou est entourée par une gorge annulaire correspondante afin de loger partiellement le joint d'étanchéité (25), tandis que la cloison (13) de l'autre carter (12) d'engrenage appliqué contre le précédent présente une surface plane dans la région des traversées (18, 19).

6. Groupe d'engrenages selon la revendication 5, caractérisé en ce que des douilles (27) servant de guides et ressortant du carter d'engrenage sont montées, de préférence chassées, dans les traversées comportant un chanfrein (26) ou entourées d'une rainure annulaire.

FIG 1

FIG 2

FIG 3

FIG 4